# EUROPEAN PATENT APPLICATION

(11) **EP 1 624 210 A2**
(43) Date of publication of application: **08.02.2006**
(21) Application number: 05015590.2
(22) Date of filing: 19.07.2005
(51) Int. Cl.: F16D 11/04, F16D 7/04

(54) **Friction clutch, particularly for motorcycles**

(30) Priority: 05.08.2004 IT TO20040555
(71) Applicant: Strada S.R.L., 10023 Chieri (IT)
(72) Inventor: Strada, Vito, 10023 Chieri (IT)
(74) Representative: Spandonari, Carlo

(57) **Abstract**

The clutch comprises a clutch basket (23) and a hub (12) arranged coaxially and connectable to a driving member and a driven member (5). A drum (20) is coaxially supported within the clutch basket (23) and a pack of clutch plates are alternately connected to the clutch basket (23) and to the drum (5). A pressure member (26) is constrained to rotate with the hub (12) and is biased by springs (30) to push the plates against an abutment of the hub (12). The drum (20) has teeth engaging slots borne by the hub (12) in a first direction of rotation. The pressure member pivotally supports rollers (36) about radial axes, which are in rotary and shifting engagement in an opposite direction with respective front inclines of the drum (5), in order to draw the pressure member away from the drum against the elastic means (30) when a predetermined inverse-torque treshold is reached.

## Description

The present invention relates to a friction clutch for vehicles, particularly for motorcycles.

For a gradual transmission of the driving torque to the driveline, the friction clutches make use of two, mutually linked packs of clutch plates which are respectively connected to a driving member and to a driven member. The clutch plates are biased against each other by elastic means and are disengageable by manual control.

Since rapid torque reverses arise when shifting down gear, particularly in high-performance vehicles such as sport motorcycles, with high differentials which may overload the engine to its breaking-point, EP-A-97 122 156.9 describes a friction clutch for motorcycles which is provided with a device for automatically disengaging the clutch when a maximum inverse-torque is reached. Such device makes use of balls clamped between opposite inclines, so that the two members of the clutch are disengaged when a predetermined inverse-torque threshold is exceeded, which threshold is adjustable by changing parameters such as the slope of the inclines, the elastic coefficient of the elastic means, etc.

A main object of the invention is now to provide a friction clutch having an automatic clutch-disengaging device which is easier to manufacture, though equally effective, than the known devices.

Moreover, though the friction clutch of the above european document is effective in limiting the inverse torque when a predetermined threshold is reached, however, with particular operative conditions, mainly in presence of wear of the the rolling surfaces, it is liable to jamming because the balls, which are free to roll between the inclines, may escape from their tracks and become seized between the driving member and the driven member.

Therefore, it is another aim of the invention to improve the above friction clutch in order to prevent jamming.

The above object and other aims and advantages, which will better appear below, are achieved by a friction clutch having the features recited in claim 1, while the dependent claims state other advantageous, though secondary features.

The invention will now be described in more detail with reference to a preferred, non-exclusive embodiment, shown by way of non-limiting example in the attached drawings, wherein:
Fig. 1 is a view in axial section of a friction clutch according to the invention;

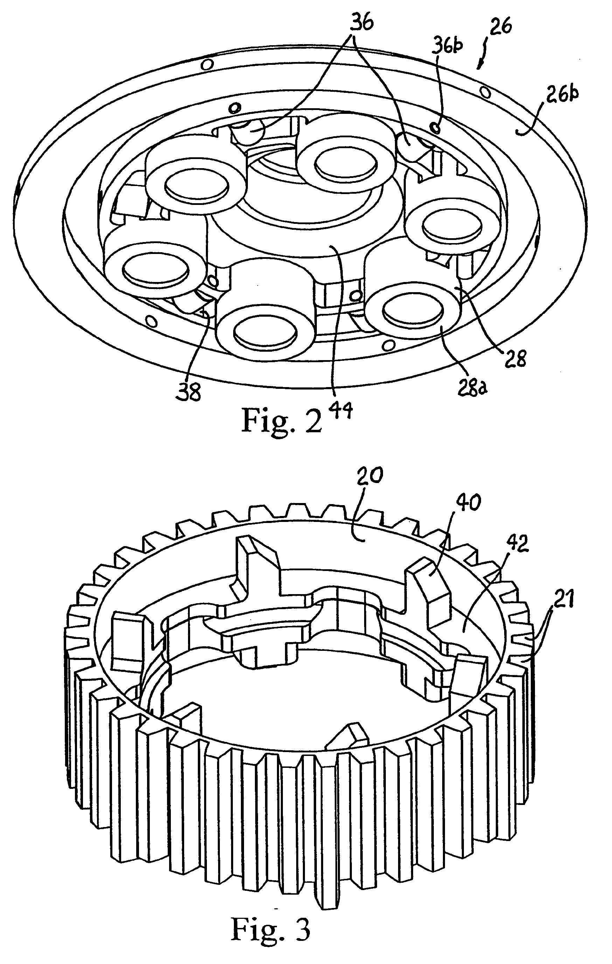

Fig. 2 is a perspective view of a first element of the friction clutch of Fig. 1;
Fig. 3 is a perspective view of a second element of the friction clutch of Fig. 1;
Fig. 4 is a front view of a third element of the friction clutch of Fig. 1.

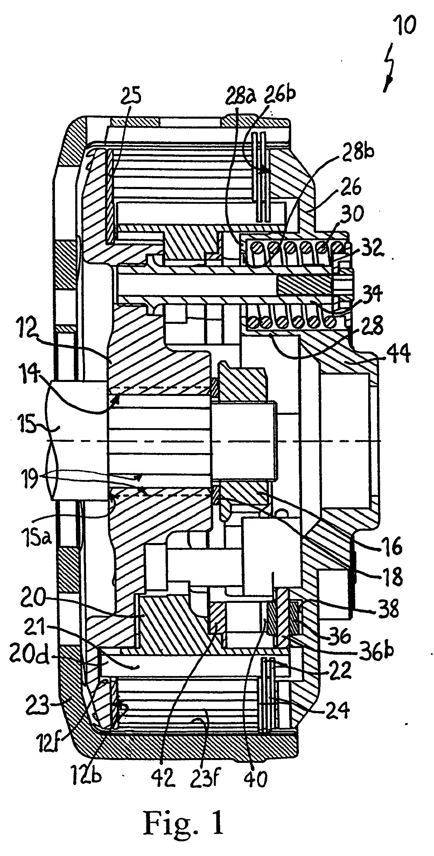

With reference to the above figures, a friction clutch 10 comprises a hub 12 having an axial cavity 14. Hub 12 is keyed to a driven shaft 15 having a shoulder 15a. Hub 12 is axially clamped between shoulder 15a and a threaded nut 16, with interposition of a washer 18. Hub 12 and shaft 15 are coupled for rotation via a spline coupling 19 (shown diagrammatically in Fig. 1).

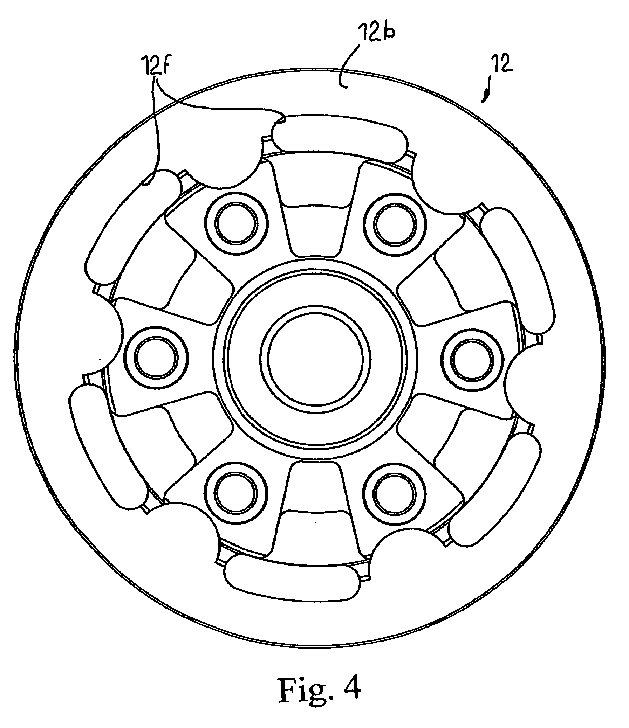

A drum 20 having longitudinal grooves 21 on its outer surface is coaxially supported on hub 10 and supports a first set of clutch plates 22 having internal toothings which engage longitudinal grooves 21. The hub and the drum are surrounded by a clutch basket 23 having longitudinal slots 23f. Clutch basket 23 is connectable to a crankshaft (not shown). A second set of clutch plates 24 housed within clutch basket 23, which are alternately arranged with respect to first plates 22. The second plates 24 are provided with external toothings which engage longitudinal slots 23f. For better clarity, only a few plates are shown in Fig. 1, but it is understood that the pack of plates occupies the entire lenght the grooves. Drum 20 has front teeth 20d rising from its longitudinal end facing hub 12. Teeth 20d engage respective arched slots 12f (Fig. 4) in the hub, which slots are suitably elongated in order to allow the hub to limitedly rotate with respect to the drum.

The pack of plates is axially clamped between an abutment 12b of the hub, with a frustoconical elastic member 25 arranged therebetween, and a pressure member consisting of a plate-pushing cap 26 which is provided with a peripheral abutment 26b and is elastically biased against the pack of plates. To this purpose, plate-pushing cap 26 has equally-spaced, longitudinal sockets 28 having respective helical springs 30 housed therein. Springs 30 are compressed between a bottom 28a of the socket on the side of hub 12, and a retaining member in form of a disc 32 which supported at one end of a longitudinal stud 34 that is inserted in a hole 28b in bottom 28a and is screwed to hub 12 at its opposite end.

Plate-pushing cap 26 is coupled to drum 20 via rollers 36 which are pivotally supported within respective equally-spaced seats 38 on the plate-pushing cap, about respective axes that are substantially radial with respect to the hub. Rollers 36 are in rotary and shifting engagement with respective inclines 40 borne by a disc-shaped steel insert 42 that is frontally applied onto drum 20 and is constrained to rotate therewith. Each roller is slightly tapered inwardly and is supported on a pin 36b that is hinged to the side walls of the seat 38 with its opposite ends.

Plate-pushing cap 26 has a substantially frustococonical axial portion 44 which can be pushed or pulled rightward in Fig. 1 by manual driving means (not shown) against springs 30, in order to draw cap 26 away from the pack of plates so that the clutch is disengaged.

The set of rollers 36 engaging disc-shaped insert 42 provides an automatic clutch-disengaging device which starts operating when a maximum inverse torque threshold is reached. The operation of the device is similar to the known device described in the above-cited prior document. When a predetermined inverse-torque threshold is exceeded, rollers 36 roll along the corresponding inclines 40, so that the plat-pushing cap is axially drawn away from hub 12 against springs 30 and the pack of plates is released, with disengagement of the clutch. The inverse-torque threshold required for the disengagement is adjustable in a known way by changing parameters such as the slope of the planes, the elastic coefficient of the springs, etc.

Jamming is also prevented by using rollers 36 that are guided to rotate around respective axes are integral with the plate-pushing cap. Furthermore, wear is reduced and a longer mechanical life is obtained by making the inclines on a steel insert applied on the drum, so that the latter can be advantageously made of an aluminium alloy for weight reduction.

A preferred embodiment of the invention has been described herein, but of course many changes may be made by a person skilled in the art within the scope of the inventive concept. For instance, rollers 36 could be manufactured enbloc, and the inclines could be directly made on the drum.

## Claims

1. A friction clutch for vehicles, comprising a clutch basket (23) and a hub (12) which are arranged coaxially and are connectable to a driving member and a driven member (15) respectively, a drum (20) which is coaxially supported within the clutch basket (23), a pack of clutch plates which are alternately connected to the clutch basket (23) and to the drum (20), and a pressure member (26) that is constrained to rotate with the hub (12) and is biased by elastic means (30) to axially push the clutch plates against an abutment (12b) of the hub (12), **characterized in that** said drum (20) has means for rigid engagement (20d), in a first direction of rotation, with corresponding means (12f) borne either by said hub (12) or pressure member (26), and **in that** rollers (36) are pivotally supported either on said pressure member (26) or drum (20) about respective axes that are substantially radial with respect to the hub, and are in rotary and shifting engagement, in a direction opposing said first direction of rotation, with respective inclines (40) which are frontally borne by the other of said pressure member (26) or drum (20), in order to draw the pressure member (26) away from the drum (20), against said elastic means (30), when a predetermined inverse-torque treshold is reached.

2. The friction clutch of claim 1, **characterized in that** said rollers (36) are pivotally supported on said pressure member.

3. The friction clutch of claim 1 or 2, **characterized in that** each of said rollers has a substantially cylindrical, main body (36) with two opposite, longitudinal projections.

4. The friction clutch of claim 3, **characterized in that** said substantially cylindrical, main body (36) is supported on a pin (36b) whereby said opposite projections are the axial ends of the pin.

5. The friction clutch of anyone of claims 2 to 4, **characterized in that** said rollers (36) are housed within respective, equally spaced seats (38) in the pressure member (26) and said opposite projections are pivotally supported on the side walls of the seats (38).

6. The friction clutch of anyone of claims 2-5, **characterized in that** said inclines (40) are made on a disc insert (26) of a wear resistent material, which is frontally applied onto the drum (20).

7. The friction clutch of anyone of claims 1 to 6, where that said pressure member consists of a cap (38) having an annular surface for abutting against said clutch plates, **characterized in that** said elastic means consist of helical springs (30) which are housed within respective, equally-spaced, longitudinal seats (28) in the cap, and are compressed between a bottom (28a) of the seat on the side of the hub (12), and a retaining member (32) which is supported at one end of a longitudinal stud (34) that is inserted in a hole (28b) in the bottom (28a) and is screwed to the hub at its opposite end.

8. The friction clutch of anyone of claims 1 to 6, **characterized in that** said means for rigid engagement and corresponding means consist of teeth (20d) which are integral with the drum and engage respective elongated slots (12f) in the hub.
